(19) Europäisches Patentamt
European Patent Office
Office européen des brevets

(11) **EP 3 587 298 A1**

(12) **EUROPEAN PATENT APPLICATION**
published in accordance with Art. 153(4) EPC

(43) Date of publication:
**01.01.2020 Bulletin 2020/01**

(21) Application number: **18828991.2**

(22) Date of filing: **05.07.2018**

(51) Int Cl.:
**B65D 77/00** (2006.01)　　**D01F 8/14** (2006.01)
**D03D 15/00** (2006.01)　　**D03D 15/02** (2006.01)

(86) International application number:
**PCT/JP2018/025613**

(87) International publication number:
**WO 2019/009386 (10.01.2019 Gazette 2019/02)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **05.07.2017　JP 2017132333**

(71) Applicant: **KB Seiren, Ltd.**
**Sabae-shi**
**Fukui 916-0038 (JP)**

(72) Inventors:
• **NAKANO, Yudai**
**Sabae-shi**
**Fukui 916-0038 (JP)**
• **TAKAHIRA, Sunao**
**Sabae-shi**
**Fukui 916-0038 (JP)**
• **IGURO, Toshihiro**
**Sabae-shi**
**Fukui 916-0038 (JP)**
• **SAITO, Tomonori**
**Sabae-shi**
**Fukui 916-0038 (JP)**

(74) Representative: **Isarpatent**
**Patent- und Rechtsanwälte Behnisch Barth
Charles
Hassa Peckmann & Partner mbB
Friedrichstrasse 31
80801 München (DE)**

(54) **FILAMENTS FOR BEVERAGE EXTRACTION FILTER AND WOVEN FABRIC COMPRISING SAME FOR BEVERAGE EXTRACTION FILTER**

(57)　To provide a filament for obtaining a palatable beverage extracting filter having improved environmental safety, being capable of maintaining the strength of the fabric and having improved formability, and a woven fabric obtained from the filament.

A core-sheath type conjugate filament for a palatable beverage extracting filter, wherein a core component is a homopolyester having a melting point of 220°C or more, the sheath component is a copolyester containing terephthalic acid and a diol as major components and having a melting point is at least 40°C lower than that of the core component, wherein a mass change after boiling in an aqueous ethanol solution in a concentration of 10 mass% for 1 hour is 4% or less, and an eluted amount of heavy metals is less than 0.1 ppm.

**Description**

TECHNICAL FIELD

The present invention relates to a filament for a palatable beverage extracting filter, and a woven fabric for a palatable beverage extracting filter comprising the filament.

BACKGROUND ART

Conventionally, as a material for a palatable beverage extracting filter, a paper or a non-woven fabric including polypropylene or polyethylene has been used as a major material. However, these materials have problems that the materials have poor transparency and tea leaves in the package material cannot be seen well. Paper has a problem that it cannot be treated by heat sealing. Therefore, in recent trends, a palatable beverage extracting bag made of a woven fabric having high-quality feeling in which tea leaves in the palatable beverage extracting bag can be seen is increasing.

As a material fiber of the palatable beverage extracting filter used for the palatable beverage extracting bag made of a woven fabric, the major material is a polyamide fiber. The extracting filter made of the woven fabric including a polyamide fiber has improved three dimensional shape-retaining properties and excellent elastic recovery against the deformation, and therefore the woven fabric is soft and has improved feeling. However, it has been previously indicated that the extracting bag including a polyamide fiber has problems of the yellowing because of the effect of oxygen in air, the dimension change of the extracting bag because of the swelling of the polyamide fiber in hot water, the poor liquid draining when the bag after extracting is removed from the container, the poor settleability of the extracting bag in hot water because of low settleability of polyamide, and environmental contamination because of forming nitrogen oxides by burning the used bag.

In order to solve the problems of the polyamide fiber, a palatable beverage extracting filter including a polyester fiber has been researched. For example, in Patent Document 1, a method for producing a palatable beverage extracting filter being composed of a woven fabric including a polyester fiber having a core-sheath structure in which there is a difference of the melting point between the core and the sheath is proposed. Also, in Patent Document 2, a multifilament for separation which can be used as a polyester monofilament for a palatable beverage extracting filter being composed of a copolyester containing isophthalic acid as the copolymerization component, and a palatable beverage extracting filter obtained therefrom are proposed.

PRIOR ART DOCUMENTS

PATENT DOCUMENTS

    Patent Document 1: JP patent No. 3,459,951
    Patent Document 2: JP-A-2008-45244

SUMMARY OF THE INVENTION

PROBLEMS TO BE SOLVED BY THE INVENTION

However, in Patent Document 1, a catalyst used as a catalyst for producing polyester in a polyester fiber was not described, and also the environmental safety of the palatable beverage extracting filter including a polyester fiber was not described.

The woven fabric being composed of single component multifilaments including the copolyester described in Patent Document 2 has high welding properties during heat treatment and becomes hardly peeled. However, if the woven fabric is sealed and formed into a filter, the fabric strength is decreased due to the heat treatment during sealing, and has poor formability.

The present invention is made considering the background, and the object of the present invention is to provide a filament for obtaining a palatable beverage extracting filter having improved environmental safety, being capable of maintaining the strength of the fabric and having improved formability, and a woven fabric obtained from the filament.

MEANS FOR SOLVING THE PROBLEMS

The present invention solves these problems, and includes the following configurations.

(1) A core-sheath type conjugate filament for a palatable beverage extracting filter, wherein a core component is a homopolyester having a melting point of 220°C or more, a sheath component is a copolyester containing terephthalic acid and a diol as major components and having a melting point at least 40°C lower than that of the core component, wherein a mass change after immersing in an aqueous ethanol solution in a concentration of 10 mass% for 1 hour is 4% or less, and an eluted amount of heavy metals is less than 0.1 ppm.

(2) The filament for a palatable beverage extracting filter according to (1), wherein a polycondensation catalyst for the copolyester in the sheath component is a titanium catalyst.

(3) The filament for a palatable beverage extracting filter according to (1) or (2), wherein a polycondensation catalyst for the homopolyester in the core component is a titanium catalyst.

(4) The filament for a palatable beverage extracting filter according to (1) to (3), wherein the filament is a monofilament.

(5) The filament for a palatable beverage extracting filter according to (1) to (3), wherein the filament is a multifilament.

(6) A woven fabric for a palatable beverage extracting filter, wherein the woven fabric comprises the filament according to (1) to (5).

(7) A woven fabric for a palatable beverage extracting filter, wherein the woven fabric comprises the filament according to (4) as a warp and the filament according to (5) as a weft.

(8) The woven fabric for a palatable beverage extracting filter according to (6) or (7), wherein a tearing strength is 5 N or more.

EFFECT OF THE INVENTION

According to the present invention, a filament and a woven fabric including the filament for a palatable beverage extracting filter which solve the problems of polyamide, improve environmental safety and improve formability during the production of filter when it is used for a palatable beverage extracting filter, is provided.

MODE FOR CARRYING OUT THE INVENTION

The present invention is a core-sheath type conjugate filament for a palatable beverage extracting filter.

The conjugate form of the core-sheath type conjugate filament may be a multifilament or a monofilament, it is preferably a monofilament.

The core component of the core-sheath type conjugate filament for the palatable beverage extracting filter of the present invention is a homopolyester having a melting point of 220°C or more. Examples of the homopolyester include polyesters containing, as a major component, a polyalkylene terephthalate such as polyethylene terephthalate (PET), polybutylene terephthalate (PBT) and polytrimethylene terephthalate (PTT). If the melting point of the core component is less than 220°C, the woven fabric obtained by weaving the core-sheath type conjugate filament tends to decrease the strength retention after dry heating. In terms of maintaining the strength retention of the woven fabric for filter, the core component is preferably polyethylene terephthalate.

The intrinsic viscosity of the polyester in the core component is preferably within a range of 0.4 or more and 0.8 or less. More preferably, it is within a range of 0.5 or more and 0.7 or less, and in particular, within a range of 0.55 or more and 0.65 or less. If the intrinsic viscosity is too low, the strength after knitting or weaving tends to be insufficient. If the intrinsic viscosity is too high, the intrinsic viscosity of the raw material polymer needs to be increased excessively, and the cost tends to be increased. Therefore, the above ranges are preferred.

The polymerization catalyst for the homopolyester in the core component is preferably a titanium catalyst in terms of the environmental safety.

Suitable examples of the titanium catalyst used as the polymerization catalyst include titanium acetate, titanium tetraalkoxide, titanium halides, titanate salts, and titanium alkoxides.

As these catalysts, a composite with a compound containing magnesium can be suitably used in order to improve the activity of the catalyst. Particularly preferred example includes a magnesium compound on which a coating layer of titanic acid is formed. In the present invention, the magnesium compound on which a coating layer of titanic acid is formed is a compound obtained by hydrolizing a titanium compound at a temperature of 5 to 100°C, preferably 15 to 70°C in the presence of a magnesium compound, and precipitating titanic acid on the surface to form a coating layer of titanic acid on the surface of the magnesium compound.

The content of the titanium catalyst is preferably from 10 to 500 ppm, and more preferably from 50 to 200 ppm based on the polyester resin.

The sheath component of the core-sheath type conjugate filament of the present invention is a copolyester containing terephthalic acid and a diol as major components in which the melting point is at least 40°C lower than that of the core component. More specifically, suitable example includes a copolyester containing terephthalic acid and a diol such as ethylene glycol as major components. Suitable examples of the copolymerization component include isophthalic acid, adipic acid, and sebacic acid. Among them, considering the ease of conjugating the core-sheath structure and handling properties, isophthalic acid is preferred. The difference of the melting point between the core component and the sheath component is preferably 90°C or less, and more preferably 80°C or less, and further preferably 70°C or less in terms of spinning properties, controlling in the post-processing step, the handling properties of the woven fabric for filter, or easier obtaining sufficient tearing strength of the woven fabric for filter. Note that in the present invention, in the case of the amorphous component having no peak of melting point, the softening point is considered as the melting point.

Furthermore, in the case that the copolymerization component is isophthalic acid, the ratio of terephthalic acid to isophthalic acid is preferably from 90/10 to 70/30 as the molar ratio (terephthalic acid/isophthalic acid) in terms of easy heat bonding and improved handling properties.

Further, the melting point of the sheath component can be controlled by adjusting the copolymerization component and the amount thereof.

In the case of the isophthalic acid is used as the copolymerization component, the intrinsic viscosity of the polyester in the sheath component is preferably within a range of not 0.60 or more and 0.66 or less. If the intrinsic viscosity is too low, the strength after knitting or weaving tends to be insufficient. If the intrinsic viscosity is too high, the intrinsic viscosity of the raw material polymer needs to be increased excessively, and the cost tends to be increased. Therefore, the above ranges are preferred.

When the above-described copolyester is used in the sheath component, the melting point is suitably lower than that of the core component, and the heat bonding processing becomes easier, and then the tearing strength is sufficiently maintained when the woven fabric for filter is produced, and the formability is improved, which is preferred.

Among them, in terms of obtaining the effect of the present invention, a particularly preferably combination of the core component and the sheath component is one in which the core component is polyethylene terephthalate, and the sheath component is a copolyethylene terephthalate containing substantially copolymerized isophthalic acid, wherein the ratio (molar ratio) of terephthalic acid and isophthalic acid of the copolyethylene terephthalate is preferably from 90/10 to 70/30, and more preferably the viscosity of the polyethylene terephthalate in the core component is from 0.55 to 0.65 and the viscosity of the copolyethylene terephthalate is from 0.60 to 0.66. Also, the difference of the melting point between the core component and the sheath component is preferably from about 40°C to 90°C, more preferably from about 40°C to 80°C. Among them, the preferred difference is from about 40°C to 70°C.

The polymerization catalyst for the copolyester in the sheath component is preferably a titanium catalyst in terms of the environmental safety.

Suitable examples of the titanium catalyst used as the polymerization catalyst include titanium acetate, titanium tetraalkoxide, titanium halides, titanate salts, and titanium alkoxides.

As these catalysts, a composite with a compound containing magnesium can be suitably used in order to improve the activity of the catalyst. Particularly preferred example includes a magnesium compound on which a coating layer of titanic acid is formed. In the present invention, the magnesium compound on which a coating layer of titanic acid is formed is a compound obtained by hydrolizing a titanium compound at a temperature of 5 to 100°C, preferably 15 to 70°C in the presence of a magnesium compound, and precipitating titanic acid on the surface to form a coating layer of titanic acid on the surface of the magnesium compound.

The content of the titanium catalyst is preferably from 10 to 500 ppm, and more preferably from 50 to 200 ppm based on the polyester resin.

The core-sheath ratio of the core-sheath type conjugate filament of the present invention is preferably from 20/80 to 80/20 (by volume), and more preferably from 40/60 to 60/40. When the ratio is within the range, the core component maintains the strength more suitably, and the heat shrinking percentage of the core-sheath type conjugate filament for the palatable beverage extracting filter can be suppressed. Therefore, the slippage in the woven fabric is easily prevented, and the formability as the filter is good.

The fineness of the core-sheath type conjugate filament of the present invention is preferably from 15 to 40 dtex, and more preferably from 20 to 35 dtex, considering the formability in producing the woven fabric for a palatable beverage extracting filter, and extraction properties of the filter.

In the case that the core-sheath type conjugate filament of the present invention is a multifilament, the number of filaments is preferably from 2 to 5. When the number is within the range, in particular, the aperture size can be effectively controlled by using a smaller amount of yarns than the monofilament, and the extraction properties becomes better with less expensive. Therefore, by heat adhesiveness of the sheath component of the multifilament, each filaments can be aligned uniformly so as to be flat in a longitudinal direction of the fiber, then have improved formability, the used amount of yarns is decreased, aperture size can be controlled, the extraction properties is good, and preventing effect of the slippage is improved. If the number of filaments is higher than the range, the filaments may not be converged homogeneously during forming the filter, the uniform aperture may be hardly ensured, and the quality of the filter may be impaired. Further, since the uniform aperture cannot be made, the quality of the filter may be worse. Further, if the number of filaments is higher, the filter has poor transparency and the quality of the filter can be impaired.

In the case that the core-sheath type conjugate filament is a multifilament, the single yarn fineness is preferably from 3 to 20 dtex, and more preferably from 4 to 18 dtex, considering the formability in producing the woven fabric for the palatable beverage extracting filter, and extraction properties of the filter.

In the core-sheath type conjugate filament of the present invention, the mass change after immersing in an aqueous ethanol solution in a concentration of 10 mass% for 1 hour is 4% or less.

By achieving such a mass change, the filament has improved environmental safety and safety as the palatable beverage extracting filter. More preferably, the mass change is 2% or less. Further preferably, the mass change is 1% or less.

The mass change is a value calculated by the following equation.

$$\text{Mass change (\%)} = [(\text{mass before immersing - mass after immersing}) / (\text{mass before immersing})] \times 100$$

The eluted amount of heavy metals of the core-sheath type conjugate filament of the present invention is less than 0.10 ppm. The eluted amount is defined as the amount of metal elements having a true specific gravity of not less than 5.0 by immersing and eluting the filament in an ethanol solution in a concentration of 10 mass% at 100°C for 1 hour.

When the eluted amount of heavy metals is less than 0.10 ppm, it can be suitably used for the palatable beverage extracting filter, and the environmental safety is improved.

The shrinking percentage after heat water treatment of the core-sheath type conjugate filament of the present invention is preferably 10% or less, and in particular, 8% or less. By adjusting the shrinking percentage into the range, the woven fabric is not bended during heat setting, and the processability during forming is improved. The hot water shrinking percentage is preferably 3% or more in terms of the good adhesion, no slippage, and easy handling. The shrinking percentage after heat water treatment of the core-sheath type conjugate filament is a value measured by the following method.

In the core-sheath type conjugate filament of the present invention, the strength is preferably 3.8 cN/dtex or more and 4.8 cN/dtex or less, and more preferably 4.0 cN/dtex or more and 4.5 cN/dtex or less in terms of the weaving properties. The elongation is preferably 40% or more and 60% or less, and more preferably 45% or more and 55% or less in terms of the spinning properties, and weaving properties.

The core-sheath type conjugate filament of the present invention can produce a suitable woven fabric used for the palatable beverage extracting filter by weaving.

The weave of the woven fabric is suitably a plain woven fabric, for example.

In the present invention, as the woven fabric for the palatable beverage extracting filter, the core-sheath type conjugate filament of the present invention may be woven in a ratio of 100%, or may be used for the part of the woven fabric. Preferably, 40% or more is preferably used. When the core-sheath type conjugate filament of the present invention is used for the part of the woven fabric, by using a regular polyester such as homoPET as the warp and the core-sheath type conjugate filament of the present invention as the weft, the thermal adhesiveness of the intersection in woven fabrics is good, which is suitable.

The core-sheath type conjugate monofilament of the present invention is preferably used in the warp as well as the weft in terms of the design and the appearance.

Also, in terms of easy controlling of the aperture and decreasing used amount of yarns, the core-sheath type conjugate multifilament of the present invention is preferably used in at least one of the warp and the weft.

When the core-sheath type conjugate multifilament of the present invention is used as a part of the fabric, for example, using a regular polyester yarn such as homoPET or the core-sheath type conjugate polyester monofilament in which the melting point of the sheath component is higher than that of the core component for the warp, and the core-sheath type conjugate multifilament of the present invention for the weft, the heat bonding properties of the intersection in the woven fabric is good, and the formability and the extraction properties are improved, which is suitable. Also, it has better transparency than including the core-sheath type conjugate multifilament for all fabric, and has improved appearance.

The tearing strength of the woven fabric including the core-sheath type conjugate filament of the present invention is preferably 5 N or more, and particularly preferably 7 N or more in terms of the processability at the forming of the beverage extracting filter.

The aperture ratio of the woven fabric including the core-sheath type conjugate filament of the present invention is preferably from 40% to 70% in terms of easy liquid draining when used as the beverage extracting filter and less slippage of the filter.

The woven fabric being composed of the core-sheath type conjugate filament of the present invention can be used as the filter for palatable beverage by heat treating and sealing by an ultrasonic sealing method etc., and forming.

The woven fabric being composed of the core-sheath type conjugate filament of the present invention can maintain the fabric strength after sealing, and has improved formability. Therefore, various three dimensional shape palatable beverage extracting filter can be easily obtained, including a rectangular plane shape, spherical shape, tetrapak shape, four-armed scoop net shape, and other polyhedron shapes.

The beverage extracting filter obtained by including the woven fabric being composed of the core-sheath type conjugate filament of the present invention can be used for various palatable beverages such as black tea, barley tea, oolong tea, jasmine tea, green tea, and coffee.

An example of the suitable method for producing the palatable beverage extracting filter in the present invention is described below.

A core-sheath type conjugate filament is produced by using polyethylene terephthalate in which the polymerization catalyst is a titanium catalyst as the core component, and isophthalic acid copolymerized polyester in which the titanium catalyst is the polymerization catalyst as the sheath component. In this case, it can be produced by a conventional method (Conv Method) in which the undrawn filament is wound, and then drawn to produce a filament, or by a spin draw method (SPD method) in which the undrawn filament is not wound, and drawn as it is and wound. The multifilament is preferably produced by SPD method in terms of providing practically with low price and decreasing the amount of the yarn of the woven fabric. In this case, suitable spinning conditions are, for example, spinning speed of 3,200 to 4,200 m/min, spinning temperature of 290 to 300°C, and draw ratio of 3 to 4 times. Next, after the obtained core-sheath type conjugate filament was woven, the sheath component is heat treated so that the slippage at the intersection of the woven fabric does not occur to obtain a woven fabric for filter. The tearing strength of the woven fabric used for the forming into the filter is preferably 5 N or more, and particularly preferably 7 N or more. Next, a palatable beverage extracting filter can be obtained by sealing the obtained woven fabric for filter by an ultrasonic sealing method etc., forming into a suitable shape such as a tetrapak shape.

EXAMPLES

Measurements and evaluations of physical properties were performed as follows.

1) Intrinsic viscosity

0.5 g of a polymer was dissolved to a 50 ml of phenol/tetrachloroethane = 6/4 (by weight) mixed solution, and measured using Ostwald viscometer at 20°C.

2) Melting point

Using the model DSC-7 manufactured by PerkinElmer Inc., it was measured in a condition of 10 mg of chip and an increasing temperature of 10°C/min.

3) Strength, elongation

According to JIS L 1013, using AGS 1KNG autograph tensile tester manufactured by Shimadzu Corporation, the strength (cN/dtex) and the elongation (%) when the sample was stretched and broken was measured in a condition that the yarn length of the sample is 200 mm, and the tensile speed is 200 mm/min.

4) Eluted amount of heavy metals

The yarn sample was immersed in an aqueous ethanol solution in a concentration of 10 mass% at 100°C for 1 hour and eluted. The eluted ethanol solution was measured using an ICP mass spectrometer manufactured by Agilent Technologies Japan, Ltd. (Agilent 7500cs) and an ICP optical spectrometer manufactured by AMETEK, Inc. (CIROS CCD).

5) Mass change

The mass of the yarn sample was measured, and the value was considered as the mass before immersing. Next, the yarn sample was immersed in an aqueous ethanol solution in a concentration of 10 mass% at 100°C for 1 hour, and dried. The dried yarn sample was measured, and the value was considered as the mass after immersing. The mass change was calculated by the following equation.

$$\text{Mass change (\%)} = [(\text{mass before immersing - mass after immersing}) / (\text{mass}$$

$$\text{before immersing})] \times 100$$

6) Shrinking percentage

The yarn having a sample length of 500 mm and hanging a load of 2 mg/dtex was immersed in boiling water for 15 min. Next, after air drying, the shrinking percentage of the core-sheath type conjugate filament was calculated by the following equation.

$$\text{Shrinking percentage (\%)} = [(\text{initial sample length - sample length after}$$

$$\text{shrinkage}) / \text{initial sample length}] \times 100$$

7) Tearing strength

In proportion to JIS L1096 8.15.1 A-1 method (single tangue method), using a Tensilon RTA-500 tensile tester manufactured by ORIENTEC CORPORATION in a condition that the sample width is 50 mm, the sample length is 250 mm, the distance between chucks is 100 mm, and the tensile speed is 100 mm/min, the maximum load when the sample was teared was measured.

8) Extraction properties

3 g of green tea leaves was charged to the produced palatable beverage extracting filter, immersed in water at 90°C for 1 min, and then the color change of water was determined visually.

(Example 1)

A polyethylene terephthalate used for the core component (intrinsic viscosity: 0.629) was obtained by using terephthalic acid and ethylene glycol as raw materials, adding 180 ppm of a magnesium compound on which a coating layer being composed of titanic acid is formed as the polymerization catalyst for PET oligomer, and polycondensating. Next, a 25 mol isophthalic acid copolymerized polyethylene terephthalate used for the sheath component (intrinsic viscosity: 0.643) was obtained by using an acid component containing terephthalic acid and 25 mol% of added isophthalic acid and ethylene glycol as raw materials, adding 180 ppm of a magnesium compound on which a coating layer being composed of titanic acid is formed as the polymerization catalyst to the polyester, and polycondensating.
The obtained two polyester resins were fed to a melt spinning apparatus. The polymers were injected in a ratio of core to sheath by volume of 1:1, and melt spun using a spinneret having hole size of 0.45 mm at a spinning temperature of 290°C and a spinning speed of 1,500 m/min to obtain an undrawn polyester monofilament yarn.
Then, the undrawn yarn was drawn to 3.4 times at a heat roller temperature of 90°C, and heat treated under relaxation at a heat plate temperature of 160°C to obtain a polyester monofilament. (The melting point of the core component was 255°C, and the melting point of the sheath component was 185°C.)
The obtained monofilaments were woven as plain weave in a condition that the warp density was 100/2.54 cm and the weft density was 100/2.54 cm to obtain a woven fabric. The obtained woven fabric was scoured, heat treated at 200°C, and then fused the sheath component at the intersection of yarns to obtain a woven fabric for filter. The obtained woven fabric for filter was formed into a tetrapak by an ultrasonic sealing method to produce a palatable beverage extracting filter.

(Example 2)

An undrawn polyester monofilament yarn was obtained by melt spinning as similar in Example 1 except that the ratio of core to sheath by volume was changed to 7:3. Then, the undrawn yarn was drawn to 3.3 times at a heat roller temperature of 90°C, and heat treated under relaxation at a heat plate temperature of 140°C to obtain a polyester monofilament. (The melting point of the core component was 255°C, and the melting point of the sheath component was 185°C.) Then, a palatable beverage extracting filter was produced as similar in Example 1.

(Example 3)

A polyethylene terephthalate used for the core component (intrinsic viscosity: 0.63) was obtained by using terephthalic acid and ethylene glycol as raw materials, adding 200 ppm of a magnesium compound on which a coating layer being composed of titanic acid is formed as the polymerization catalyst for PET oligomer to a PET oligomer, and polycondensating.

Further, isophthalic acid copolymerized polyethylene terephthalate used for the sheath component was obtained in the method described in Example 1.

The two polyester resins were melted spun and drawn in the method described in Example 1 to obtain a polyester monofilament yarn. (The melting point of the core component was 255°C, and the melting point of the sheath component was 185°C.) The obtained polyester monofilament was used to produce a palatable beverage extracting filter as similar in Example 1.

(Comparative Example 1)

A palatable beverage extracting filter was produced by performing polymerization, melt spinning and drawing as similar in Example 1 except that the polymerization catalyst for polyethylene terephthalate used in the core component and the sheath component is 400 ppm of antimony trioxide.

(Comparative Example 2)

A palatable beverage extracting filter was produced by performing polymerization and melt spinning as similar in Example 1 except that core component was copolyethylene terephthalate used for the sheath component in Example 1. The tearing strength of the woven fabric for filter was less than 5 N, i.e., low tearing strength.

The polymerization catalyst, the core-sheath ratio of the monofilament, the eluted amount of heavy metals, the mass change, the fineness, the strength, the elongation, the shrinking percentage, the tearing strength of the woven fabric for filter used in Examples 1 to 3 and Comparative Example 1 are shown in Table 1.

[Table 1]

|  | Example 1 | Example 2 | Example 3 | Comparative Example 1 |
|---|---|---|---|---|
| polymerization catalyst | Ti | Ti | Ti | Sb |
| Core-sheath ratio | 1:1 | 7:3 | 1:1 | 1:1 |
| Eluted amount of heavy metals (ppm) | 0.02 | 0.02 | 0.02 | 1.25 |
| Mass change (%) | 0.9 | 0.9 | 0.9 | 0.9 |
| Fineness (dtex) | 28.0 | 28.0 | 28.0 | 28.0 |
| Strength (cN/dtex) | 3.81 | 4.21 | 3.78 | 3.80 |
| Elongation (%) | 51.8 | 57.7 | 54.0 | 51.0 |
| Shrinking percentage (%) | 7.2 | 7.3 | 7.0 | 7.0 |
| Tearing strength (N)<br>    Warp direction<br>    Weft direction | 7.3<br>5.9 | 7.8<br>6.2 | 7.2<br>5.7 | 7.3<br>5.8 |

(Example 4)

A polyethylene terephthalate used for the core component (intrinsic viscosity: 0.629) was obtained by using terephthalic acid and ethylene glycol as raw materials, adding 180 ppm of a magnesium compound on which a coating layer being composed of titanic acid is formed as the polymerization catalyst for PET oligomer, and polycondensating. Next, a 25 mol isophthalic acid copolymerized polyethylene terephthalate used for the sheath component (intrinsic viscosity: 0.643) was obtained by using an acid component containing terephthalic acid and 25 mol% of added isophthalic acid and ethylene glycol as raw materials, adding 180 ppm of a magnesium compound on which a coating layer being composed of titanic acid is formed as the polymerization catalyst to the polyester, and polycondensating.

The obtained two polyester resins were fed to a melt spinning apparatus. The polymers were injected in a ratio of core to sheath by volume of 50:50, using a spinneret with three holes having hole size of 0.45 mm at a spinning temperature of 295°C. The polymers were drawn to four times by withdrawing with seven times winding of a first godet roller at a peripheral velocity of 950 m/min while seven times winding of a second godet roller at a peripheral velocity of forth times as that of the first godet roller, and then the multifilament having three filaments was wound. (The melting point of the core component was 255°C, and the melting point of the sheath component was 185°C.) The obtained multifilament was 3.94 cN/dtex. The elongation was 47.7%, and the shrinking percentage was 7.5%.

The obtained multifilaments were woven as plain weave in a condition that the warp density was 120/2.54 cm and the weft density was 120/2.54 cm to obtain a woven fabric. The tearing strength of the woven fabric was 5 N or more in both direction of warp and weft. The eluted amount of heavy metals was 0.02 ppm. The mass change was 0.9%. The obtained woven fabric was scoured, heat treated at 200°C, and then fused the sheath component at the intersection of yarns to obtain a woven fabric for filter. The obtained woven fabric for filter was formed into a tetrapak by an ultrasonic sealing method to produce a palatable beverage extracting filter.

(Example 5)

The core-sheath type conjugate multifilaments obtained in Example 4 were woven as plain weave in a condition that the warp density was 140/2.54 cm and the weft density was 140/2.54 cm to obtain a woven fabric. The obtained woven fabric was scoured, heat treated at 200°C, and then fused the sheath component at the intersection of yarns to obtain a woven fabric for filter. The tearing strength of the woven fabric was 5 N or more in both direction of warp and weft. The eluted amount of heavy metals was 0.02 ppm. The mass change was 0.9%. The obtained woven fabric for filter was formed into a tetrapak by an ultrasonic sealing method to produce a palatable beverage extracting filter.

(Example 6)

Using the polyester monofilaments obtained in Example 1 as the warp and the multifilaments obtained in Example 4 as the weft, they were woven as plain weave in a condition that the warp density was 100/2.54 cm and the weft density was 100/2.54 cm to obtain a woven fabric. The tearing strength of the woven fabric was 5 N or more in both direction of warp and weft. The eluted amount of heavy metals was 0.02 ppm. The mass change was 0.9%. The obtained woven fabric was scoured, heat treated at 200°C, and then fused the sheath component at the intersection of yarns to obtain a woven fabric for filter. The obtained woven fabric for filter was formed into a tetrapak by an ultrasonic sealing method to produce a palatable beverage extracting filter.

All Examples had improved spinning properties and weaving properties. In particular, Examples 4 to 6 had improved weaving properties.

The woven fabric for filter being composed of the filament obtained by Examples improved the problems of the polyamide, had improved formability and sufficient fabric strength, could be used as the beverage extracting bag sufficiently, and the woven fabric for beverage extracting filter had improved environmental safety. The woven fabric had good qualities including soft feeling, softness, and improved handling properties. Comparative Example 1 using an antimony catalyst in the core component had high eluted amount of heavy metals and poor environmental safety. The woven fabric for filter obtained in Comparative Example 2 had insufficient strength of fabric and poor formability, which could be not used for the palatable beverage extracting filter.

In particular, the palatable beverage extracting filters obtained in Examples 1 to 3 had improved transparency and improved appearance.

Also, the palatable beverage extracting filters obtained in Examples had good extraction properties.

The multifilaments obtained in Examples 4 to 6 was easily controlled for the mesh aperture when the woven fabric was produced, not easily lead to slippage, and had good formability and extraction properties.

Among the palatable beverage extracting filters obtained in Examples, one in Example 6 was good in terms of a balance of the appearance, the cost, the formability, and the extraction properties.

**Claims**

1. A core-sheath type conjugate filament for a palatable beverage extracting filter, wherein
   a core component is a homopolyester having a melting point of 220°C or more,
   a sheath component is a copolyester containing terephthalic acid and a diol as major components and having a melting point at least 40°C lower than that of the core component,
   wherein a mass change after immersing in an aqueous ethanol solution in a concentration of 10 mass% for 1 hour is 4% or less, and an eluted amount of heavy metals is less than 0.1 ppm.

**2.** The filament for a palatable beverage extracting filter according to claim 1, wherein a polycondensation catalyst for the copolyester in the sheath component is a titanium catalyst.

**3.** The filament for a palatable beverage extracting filter according to claim 1 or 2, wherein a polycondensation catalyst for the homopolyester in the core component is a titanium catalyst.

**4.** The filament for a palatable beverage extracting filter according to any one of claims 1 to 3, wherein the filament is a monofilament.

**5.** The filament for a palatable beverage extracting filter according to any one of claims 1 to 3, wherein the filament is a multifilament.

**6.** A woven fabric for a palatable beverage extracting filter, wherein the woven fabric comprises the filament according to any one of claims 1 to 5.

**7.** A woven fabric for a palatable beverage extracting filter, wherein the woven fabric comprises the filament according to claim 4 as a warp and the filament according to claim 5 as a weft.

**8.** The woven fabric for a palatable beverage extracting filter according to claim 6 or 7, wherein a tearing strength is 5 N or more.

## INTERNATIONAL SEARCH REPORT

| | International application No. |
|---|---|
| | PCT/JP2018/025613 |

A. CLASSIFICATION OF SUBJECT MATTER
Int.Cl. B65D77/00(2006.01)i, D01F8/14(2006.01)i, D03D15/00(2006.01)i,
D03D15/02(2006.01)i

According to International Patent Classification (IPC) or to both national classification and IPC

B. FIELDS SEARCHED

Minimum documentation searched (classification system followed by classification symbols)
Int.Cl. B65D77/00, D01F8/00-8/18, D03D1/00-27/18

Documentation searched other than minimum documentation to the extent that such documents are included in the fields searched
Published examined utility model applications of Japan     1922-1996
Published unexamined utility model applications of Japan   1971-2018
Registered utility model specifications of Japan           1996-2018
Published registered utility model applications of Japan   1994-2018

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2009-5911 A (TEIJIN FIBERS LTD.) 15 January 2009, claims, paragraphs [0011], [0015], examples (Family: none) | 1-6, 8<br>7 |
| X<br>Y | JP 2008-163485 A (TEIJIN FIBERS LTD.) 17 July 2008, claims, paragraphs [0019], [0020], [0023], [0027]-[0029], examples (Family: none) | 1-6, 8<br>7 |
| X<br>Y | WO 2008/035443 A1 (TEIJIN FIBERS LTD.) 27 March 2008, claims, page 1, lines 11-16, page 6, line 25 to page 7, line 6, page 7, line 23 to page 8, line 1, page 9, lines 2, 3, examples<br>& US 2009/0241783 A1, claims, paragraphs [0029], [0031], [0034], examples & EP 2064976 A1 & CN 101511236 A | 1-4, 6, 8<br>7 |

☒  Further documents are listed in the continuation of Box C.        ☐  See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 04.09.2018 | 18.09.2018 |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

**INTERNATIONAL SEARCH REPORT**

| International application No. |
| --- |
| PCT/JP2018/025613 |

C (Continuation).    DOCUMENTS CONSIDERED TO BE RELEVANT

| Category* | Citation of document, with indication, where appropriate, of the relevant passages | Relevant to claim No. |
| --- | --- | --- |
| Y | JP 3139823 U (YAMANAKA SANGYO KK) 06 March 2008, claim 1, paragraphs [0001], [0010], [0024], table 1 (Family: none) | 7 |
| P, X | JP 2017-119932 A (KB SEIREN, LTD.) 06 July 2017, claims, paragraphs [0009], [0010], [0012]-[0030], examples (Family: none) | 1-6, 8 |
| A | JP 2009-202932 A (TEIJIN FIBERS LTD.) 10 September 2009, entire text, all drawings (Family: none) | 1-8 |
| A | JP 2016-88555 A (YAMANAKA SANGYO KK) 23 May 2016, entire text, all drawings (Family: none) | 1-8 |

Form PCT/ISA/210 (continuation of second sheet) (January 2015)

**EP 3 587 298 A1**

**REFERENCES CITED IN THE DESCRIPTION**

**Patent documents cited in the description**

- JP 3459951 B
- JP 2008045244 A